# EUROPÄISCHE PATENTSCHRIFT

(11) **EP 1 111 010 B1**
(45) Veröffentlichungstag und Bekanntmachung des Hinweises auf die Patenterteilung: **02.11.2005**
(21) Anmeldenummer: 00126139.5
(22) Anmeldetag: 30.11.2000
(51) Int. Cl.: C08L 95/00, C08K 5/20, C09D 195/00

(54) **Verwendung von Emulgatoren in Bitumenemulsionen**
Use of emulsifiers in bituminous emulsions
Utilisation d'émulsifiants dans des émulsions bitumineuses

(30) Priorität: 09.12.1999 DE 19959321
(43) Veröffentlichungstag der Anmeldung: 27.06.2001
(73) Patentinhaber: Cognis IP Management GmbH, 40589 Düsseldorf (DE)
(72) Erfinder: Bigorra Llosas, Joaquin, Dr., 08201 Sabadell (ES); Escoda, Maria, 08960-St. Just Desvern/Barcelona (ES); Pi Subirana, Rafael, Dr., 08400 Granollers (ES)

(56) Entgegenhaltungen:
- DD-A- 291 330
- US-A- 5 352 285
- US-A- 5 443 632

## Beschreibung

### Gebiet der Erfindung

Die Erfindung befindet sich auf dem Gebiet der Bitumenemulsionen und betrifft neue Emulgatoren zur Herstellung von Bitumenemulsionen.

### Stand der Technik

Bitumen stellt ein bei der schonenden Aufarbeitung von Erdöl gewonnenes dunkelfarbiges, halbfestes bis springhartes, schmelzbares, hochmolekulares Kohlenwasserstoffgemisch dar. Üblicherweise handelt es sich um kolloide Systeme, speziell Sole, die in einer öligen Grundmasse (Maltene) dunkle, harz- oder kohlenartige Teilchen mit molaren Massen im Bereich etwa 300 bis 3000 enthalten, welche als Asphaltene bezeichnet werden. Wäßrige Bitumenemulsionen werden überwiegend im Straßenbau eingesetzt. Als Emulgatoren haben sich für diesen Zweck Diamine, beispielsweise N-Stearylpropylendiamin, oder Fettsäureamidoamine, wie z.B. Talgfettsäureamidopropylamin als geeignet erwiesen. Bei der Herstellung von Bitumenemulsionen lassen sich grundsätzlich zwei unterschiedliche Verfahrensformen unterscheiden: Soll der Bitumen vor Ort direkt verarbeitet werden, ist man daran interessiert, daß die offene Zeit, d.h. die Zeit bis zum Abbinden möglichst kurz ist. In der Praxis bedeutet dies, daß die Bitumenemulsion beim Kontakt mit den Füllstoffen möglichst rasch brechen soll; man spricht in diesem Zusammenhang auch von einer hohen Bruchgeschwindigkeit.

Im zweiten Fall erfolgt die Herstellung der Bitumenemulsion im Werk, so daß man umgekehrt gerade an einer großen offenen Zeit interessiert ist, damit der Bitumen nicht während des Transportes abbindet. Hier wird also eine möglichst niedrige Bruchgeschwindigkeit gewünscht. Zur Charakterisierung der Bruchgeschwindigkeit einer Bitumenemulsion hat sich ein einfaches Testverfahren etabliert: Hierzu werden 100 g einer Bitumenemulsion unter starker Scherung solange Füllstoffe zugesetzt, bis es zum Bruch der Emulsion, d.h. zur Abscheidung des Wassers kommt. Der Bruchindex berechnet sich dann aus dem Gewichtsverhältnis von zugesetztem Füllstoff zu Emulsion multipliziert mit dem Faktor 100. Je höher der Füllstoffanteil ist, um so "langsamer" ist die Emulsion, d.h. um so niedriger ist die Bruchgeschwindigkeit.

In der Praxis gestaltet sich insbesondere die Herstellung von Bitumenemulsionen mit niedriger Bruchgeschwindigkeit ausgesprochen schwierig: nicht nur, daß die Emulsionen die Tendenz zeigen, beispielsweise bei starken Erschütterungen spontan zu brechen, häufig ist auch die Dispergierung der Füllstoffe unzureichend, d.h. die Bedeckung der Füllstoffoberflächen mit der Bitumenemulsion erfolgt nur unvollständig, was zu einer schlechten Verarbeitbarkeit der Mischungen führt.

DD-A-291 330 beschreibt die Verwendung von Fettsäureamidoaminsalzen der Formel [R¹CO-NH-(CH₂)-NHR²R³]⁺ A- zur Herstellung von wässrigen Bitumenemulsionen mit emiedrigter Bruchgeschwindigkeit.

Die komplexe Aufgabe der vorliegenden Erfindung hat folglich darin bestanden, neue Emulgatoren für die Herstellung von Bitumenemulsionen zur Verfügung zu stellen, die niedrige Bruchgeschwindigkeiten und eine vollständige Bedeckung der Füllstoffoberflächen sicherstellen.

### Beschreibung der Erfindung

Gegenstand der Erfindung ist die Verwendung von Emulgatoren, enthaltend
(a) Fettsäureamidoamine der Formel (I),

   **R**^{**1**}**CO-NH-[(CH**_{**2**}**)**_{**n**}**NR**^{**2**}**]**_{**m**}**R**^{**3**} **(I)**

   in der in der R¹CO für einen linearen oder verzweigten, gesättigten oder ungesättigten Acylrest, R² und R³ unabhängig voneinander für Wasserstoff oder einen Alkylrest mit 1 bis 3 Kohlenstoffatomen, n für Zahlen von 1 bis 10 und m für Zahlen von 2 bis 5 steht, und
(b) Kationpolymere
zur Herstellung von wäßrigen Bitumenemulsionen.

Überraschenderweise wurde gefunden, daß spezielle Fettsäureamidoamine in Kombination mit Kationpolymeren die Herstellung von Bitumenemulsionen ermöglichen, die eine sehr niedrige Bruchgeschwindigkeit zeigen und in denen die Füllstoffoberflächen vollständig vom Bitumen bedeckt sind. Die Erfindung schließt dabei die Erkenntnis ein, daß die resultierenden Bitumenemulsionen bei gleichem Feststoffgehalt eine höhere Stabilität aufweisen, d.h. eine geringe Tendenz zur Sedimentation zeigen.

### Fettsäureamidoamine

Fettsäureamidoamine stellen bekannte Fettstoffe dar, die nach den einschlägigen Verfahren der organischen Chemie erhalten werden können. Typische Beispiele sind Fettsäureamidoamine, deren Fettsäurekomponente sich von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen ableiten. Für die Kondensation mit den Fettsäuren kommen beispielsweise Diethylentriamin, Triethylentriamin und Tetraethylenpentamin sowie deren Gemische in Frage. Vorzugsweise setzt man Fettsäureamidoamine der Formel (I) ein, in der R¹CO für den Acylrest der Kokosfettsäure, der Talgfettsäure sowie der teilgehärteten Talgfettsäure, R² und R³ für Wasserstoff, sowie n und m für 2 oder 3 steht. Die Herstellung der Amidoamine kann durch direkte Kondensation der Polyamine mit den Fettsäuren oder durch Transamidierung unter Einsatz von Fettsäuremethylestem oder Triglyceriden erfolgen.

### Kationpolymere

Geeignete Kationpolymere sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von Diallylammoniumsalzen und Acrylamiden, quaternierte Vinylpyrrolidon/Vinylimidazol-Polymere, wie z.B. Luviquat® (BASF), Kondensationsprodukte von Polyglycolen und Aminen, quaternierte Kollagenpolypeptide, wie beispielsweise Lauryldimonium hydroxy propyl hydrolyzed collagen (Lamequat®L/Grünau), quaternierte Weizenpolypeptide, Polyethylenimin, kationische Siliconpolymere, wie z.B. Amidomethicone, Copolymere der Adipinsäure und Dimethylaminohydroxypropyldiethylentriamin (Cartaretine®/Sandoz), Copolymere der Acrylsäure mit Dimethyldiallylammoniumchlorid (Merquat® 550/Chemviron), Cholinaten, Polyaminopolyamide, wie z.B. beschrieben in der **FR 2252840 A** sowie deren vernetzte wasserlöslichen Polymere, kationische Chitinderivate wie beispielsweise quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar® CBS, Jaguar® C-17, Jaguar® C-16 der Firma Celanese, quaternierte Ammoniumsalz-Polymere, wie z.B. Mirapol® A-15, Mirapol® AD-1, Mirapol® AZ-1 der Firma Miranol. Ferner können auch Polymere auf Basis von Adipinsäure und Diethylentriamin eingesetzt werden, welche mit Dimethylsulfat, Methylchlorid oder Benzylchlorid quaterniert und unter der Bezeichnung Fibrabon® im Handel erhältlich sind. Vorzugsweise setzt man Kationpolymere ein, die als Monomer oder Co-Monomer Acrylsäure und/oder Methacrylsäure oder deren Amide enthalten. Im Sinne der Erfindung ist es möglich, die Fettsäureamidoamine und die Kationpolymere - jeweils bezogen auf den Feststoffgehalt - im Gewichtsverhältnis 99,9 : 0,1 bis 50 : 50, vorzugsweise 95 : 5 bis 65 : 35 und insbesondere 90 : 10 bis 75 : 25 einzusetzen.

### Gewerbliche Anwendbarkeit

In der Regel werden die Emulgatoren in Mengen von 0,15 bis 1 Gew.-% - bezogen auf die Bitumenemulsionen - eingesetzt. Zur Herstellung der Emulsionen legt man vorzugsweise die wäßrige Emulgatorlösung und den Bitumen aus separaten Tanks in eine Mischapparatur vor, in der die Homogenisierung unter starker Scherung erfolgt. Für diesen Zweck eignen sich beispielsweise ein Ultra-Turrax oder eine Kolloidmühle. Die Emulgatoren werden üblicherweise auf 50 bis 70 °C temperiert, während der Bitumen aus Gründen der Verarbeitbar- und Pumpbarkeit Temperaturen oberhalb von 120 und vorzugsweise von 140 bis 150 °C aufweist. Die resultierende Emulsion weist in der Regel eine Mischtemperatur im Bereich von 60 bis 90 °C auf.

### Beispiele

**Beispiel H1.** In einem 1-I-Dreihalskolben mit Rührer, Rückflußkühler und Destillationsaufsatz wurden bei 90 °C 500 g (1,85 Mol) Talgfettsäure, 272 g (1,86 Mol) Triethylentetramin (TETA) und 1 g Hypophosphorsäure vorgelegt. Die Temperatur wurde innerhalb von 3 h bis auf 180 °C gesteigert und das Kondensationswasser kontinuierlich abgetrennt, bis das Reaktionsprodukt eine Säurezahl unter 2 mg KOH/g aufwies.

**Beispiel H2.** Analog Beispiel H1 wurden 500 g Talgfettsäure und 350 g (0,186 Mol) Tetraethylenpentamin (TEPA) kondensiert.

**Beispiel 3.** Zur Herstellung der wäßrigen Emulgatorphase wurden die gewünschten Mengen des Amidoamins und des Kationpolymers (A = Acrylamid-Diallylammoniumchlorid-Copolymer; B = Acrylamid-Acrylcholinat-Copolymer) bei etwa 45 °C in einer Wasserphase dispergiert, die durch Zugabe von Salzsäure auf einen pH-Wert von 2,5 bis 3 eingestellt wurde. Die Herstellung der Bitumenemulsionen erfolgte dann in einer Pilotanlage der Firma Atomix. Hierzu wurden die wäßrigen Emulgatoren (56 °C) und der Bitumen (140 °C) in zwei verschiedenen Tanken vorgelegt und unter starker Scherung (9.000 Upm) mit Hilfe einer Kolloidmühle kontinuierlich vermischt (Temperatur der Mischung : 75 °C). Die Ergebnisse sind in Tabelle 1 zusammengefaßt. Bei der Bruchgeschwindigkeit wurde zwischen "s" (= schnell) und "I" (= langsam) unterschieden. In der Zeile "Füllstoffmenge" ist die Menge Füllstoff angegeben, die der Emulsion bis zum Bruch zugesetzt werden konnte. Der Trockenrückstand der Emulsionen wurde nach einer Behandlung von 2 h bei 105 °C und 1 h bei 163 °C bestimmt. Die Beispiele 1 bis 5 sind erfindungsgemäß, die Beispiele V1 und V2 dienen zum Vergleich.

**Tabelle 1**

| **Bitumenemulsionen (Mengenangaben als Gew.-%)** | | | | | | | |
|---|---|---|---|---|---|---|---|
| **Zusammensetzung / Performance** | **1** | **2** | **3** | **4** | **5** | **V1** | **V2** |
| Emulgatomenge, gesamt | 0,81 | 1,18 | 0,74 | 1,11 | 0,81 | 0,5 | 0,5 |
| - Amidoamin gemäß Bsp. H1 | 0,63 | 1,00 | 0,63 | 1,00 | - | 0,5 | - |
| - Amidoamin gemäß Bsp. H2 | - | - | - | - | 0,63 | - | 0,5 |
| - Kationpolymer A | 0,18 | 0,18 | 0,11 | 0,11 | - | - | - |
| - Kationpolymer B | - | - | - | - | 0,18 | - | - |
| Bruchgeschwindigkeit | l | l | l | l | l | s | s |
| Füllstoffmenge [g] | 193 | 146 | 133 | 138 | 121 | 80 | 64 |
| Trockenrückstand [Gew.-%] | 61,0 | 61,0 | 61,0 | 60,6 | 61,0 | 61,0 | 61,0 |

## Patentansprüche

1. Verwendung von Emulgatoren, enthaltend
(a) Fettsäureamidoamine der Formel (I),
**R**^{**1**}**CO-NH-[(CH**_{**2**}**)**_{**n**}**NR**^{**2**}**]**_{**m**}**R**^{**3**} **(I)**
in der in der R¹CO für einen linearen oder verzweigten, gesättigten oder ungesättigten Acylrest, R² und R³ unabhängig voneinander für Wasserstoff oder einen Alkylrest mit 1 bis 3 Kohlenstoffatomen, n für Zahlen von 1 bis 10 und m für Zahlen von 2 bis 5 steht, und
(b) Kationpolymere
zur Herstellung von wäßrigen Bitumenemulsionen.

2. Verwendung nach Anspruch 1, **dadurch gekennzeichnet, daß** man Fettsäureamidoamine der Formel (I) einsetzt, in der R¹CO für den Acylrest der Kokosfettsäure, der Talgfettsäure sowie der teilgehärteten Talgfettsäure steht.

3. Verwendung nach den Ansprüchen 1 und/oder 2, **dadurch gekennzeichnet, daß** man Fettsäureamidoamine einsetzt, die sich von Diethylentriamin, Triethylentetramin und/oder Tetraethylenpentamin ableiten.

4. Verwendung nach mindestens einem der Ansprüche 1 bis 3, **dadurch gekennzeichnet, daß** man Fettsäureamidoamine der Formel **(I)** einsetzt, in der R² und R³ für Wasserstoff sowie n und m für 2 oder 3 steht.

5. Verwendung nach mindestens einem der Ansprüche 1 bis 4, **dadurch gekennzeichnet, daß** man Kationpolymere einsetzt, die ausgewählt sind aus der Gruppe, die gebildet wird von quaternierten Hydroxyethylcellulosen, kationischen Stärken, Copolymeren von Diallylammoniumsalzen und Acrylamiden, quaternierten Vinylpyrrolidon/Vinylimidazol-Polymeren, Kondensationsprodukten von Polyglycolen und Aminen, quaternierten Kollagenpolypeptiden, quaternierten Weizenpolypeptiden, Polyethyleniminen, kationischen Siliconpolymeren , Copolymeren der Adipinsäure und Dimethylaminohydroxypropyldiethylentriamin, Copolymeren der Acrylsäure mit Dimethyldiallylammoniumchlorid, Cholinaten, Polyaminopolyamiden sowie deren vernetzten wasserlöslichen Polymeren, kationischen Chitinderivaten, Kondensationsprodukten aus Dihalogenalkylen mit Bisdialkylaminen, kationischem Guar-Gum, quaternierten Ammoniumsalz-Polymeren, quaternierte Polyamide auf Basis von Adipinsäure und Diethylentriamin sowie deren Gemischen.

6. Verwendung nach mindestens einem der Ansprüche 1 bis 5, **dadurch gekennzeichnet, daß** man Kationpolymere einsetzt, die als Monomer oder Co-Monomer (Meth-)Acrylsäure oder deren Amide enthalten.

7. Verwendung nach mindestens einem der Ansprüche 1 bis 6, **dadurch gekennzeichnet, daß** man die Fettsäureamidoamine und die Kationpolymere - jeweils bezogen auf den Feststoffgehalt - im Gewichtsverhältnis 99,9 : 0,1 bis 50 : 50 einsetzt.

8. Verwendung nach mindestens einem der Ansprüche 1 bis 7, **dadurch gekennzeichnet, daß** man die Fettsäureamidoamine und die Kationpolymere - jeweils bezogen auf den Feststoffgehalt - im Gewichtsverhältnis 95 : 5 bis 65 : 35 einsetzt.

9. Verwendung nach mindestens einem der Ansprüche 1 bis 8, **dadurch gekennzeichnet, daß** man die Emulgatoren in Mengen von 0,15 bis 1 Gew.-% - bezogen auf die Bitumenemulsionen - einsetzt.

## Claims

1. Use of emulsifiers containing
(a) fatty acid amidoamines corresponding to formula (I):
**R**^{**1**}**CO-NH-[(CH**_{**2**}**)**_{**n**}**NR**^{**2**}**]**_{**m**}**R**^{**3**} **(I)**
in which R¹CO is a linear or branched, saturated or unsaturated acyl group, R² and R³ independently of one another represent hydrogen or a C₁₋₃ alkyl group, n is a number of 1 to 10 and m is a number of 2 to 5, and
(b) cationic polymers
for the production of aqueous bitumen emulsions.

2. Use claimed in claim 1, **characterized in that** fatty acid amidoamines of formula (I), in which R¹CO is the acyl component of coconut fatty acid, tallow fatty acid and partly hydrogenated tallow fatty acid, are used.

3. Use claimed in claims 1 and/or 2, **characterized in that** fatty acid amidoamines derived from diethylenetriamine, triethylenetetramine and/or tetraethylene pentamine are used.

4. Use claimed in at least one of claims 1 to 3, **characterized in that** fatty acid amidoamines of formula (I), in which R¹ and R³ represent hydrogen and n and m = 2 or 3, are used.

5. Use claimed in at least one of claims 1 to 4, **characterized in that** the cationic polymers used are selected from the group consisting of quaternized hydroxyethyl celluloses, cationic starches, copolymers of diallyl ammonium salts and acrylamides, quaternized vinyl pyrrolidone/vinyl imidazole polymers, condensation products of polyglycols and amines, quaternized collagen polypeptides, quaternized wheat polypeptides, polyethylene imines, cationic silicone polymers, copolymers of adipic acid and dimethylaminohydroxypropyl diethylenetriamine, copolymers of acrylic acid with dimethyl diallyl ammonium chloride, cholinates, polyaminopolyamides and crosslinked water-soluble polymers thereof, cationic chitin derivatives, condensation products of dihaloalkyls with bis-dialkylamines, cationic guar gum, quaternized ammonium salt polymers, quaternized polyamides based on adipic acid and diethylene triamine and mixtures thereof.

6. Use as claimed in at least one of claims 1 to 5, **characterized in that** cationic polymers containing (meth)acrylic acid or amides thereof as monomer or comonomer are used.

7. Use as claimed in at least one of claims 1 to 6, **characterized in that** the fatty acid amidoamines and the cationic polymers are used in a ratio by weight of 99.9:0.1 to 50:50, based on their solids contents.

8. Use as claimed in at least one of claims 1 to 7, **characterized in that** the fatty acid amidoamines and the cationic polymers are used in a ratio by weight of 95:5 to 65:35, based on their solids contents.

9. Use as claimed in at least one of claims 1 to 8, **characterized in that** the emulsifiers are used in quantities of 0.15 to 1 % by weight, based on the bitumen emulsions.

## Revendications

1. Utilisation d'émulsionnants contenant :
(a) des amidoamines d'acides gras répondant à la formule (I),
R¹ CO-NH-[(CH₂)ₙ NR²]ₘ R³ (I)
dans laquelle R¹ CO représente un radical acyle linéaire ou ramifié, saturé ou insaturé,
R² et R³ représentent, indépendamment l'un de l'autre, un atome d'hydrogène ou un radical alkyle comportant de 1 à 3 atome(s) de carbone et, n représente des nombres de 1 à 10 et m des nombres de 2 à 5, et
(b) des polymères cationiques,
pour la préparation d'émulsions bitumineuses aqueuses.

2. Utilisation selon la revendication 1,
**caractérisée en ce qu'**
on utilise des amidoamines d'acides gras répondant à la formule (I),
dans laquelle R¹CO représente le radical acyle de l'acide gras de coco , de l'acide gras de suif ainsi que de l'acide gras de suif partiellement durci.

3. Utilisation selon la (les) revendication(s) 1 et/ou 2 ,
**caractérisée en ce qu'**
on utilise des amidoamines d'acides gras qui dérivent de la diéthylènetriamine, la triéthylènetétramine et/ou la tétraéthylènepentamine.

4. Utilisation selon au moins une des revendications 1 à 3,
**caractérisée en ce qu'**
on utilise des amidoamines d'acides gras répondant à la formule (I),
dans laquelle R² et R³ représentent un atome d'hydrogène, n et m ayant pour valeur 2 ou 3.

5. Utilisation selon au moins une des revendications 1 à 4 ,
**caractérisée en ce qu'**
on utilise des polymères cationiques sélectionnés dans le groupe constitué par des hydroxyéthylcelluloses quaternisées, des amidons cationiques, des copolymères de sels de diallylammonium et d'acrylamides, des polymères vinylpyrrolidone/vinylimidazole quaternisés, des produits de condensation de polyglycols et d'amines, des polypeptides de collagène quaternisés, des polypeptides de froment quaternisés, des polyéthylènimines, des polymères de silicones cationiques, des copolymères de l'acide adipique et de la diméthylaminohydroxypropyldiéthylènetriamine, des copolymères de l'acide acrylique avec le chlorure de diméthyldiallylammonium, des cholinats, des polyaminopolyamides ainsi que leurs polymères hydrosolubles réticulés, des dérivés de chitine cationiques, des produits de condensation de dihalogènalkyles avec des bis-dialkylamines, du guar- gomme cationique, des polymères de sels d'ammonium quaternisés, des polyamides quaternisés à base d'acide adipique et de diéthylènetriamine ainsi que leurs mélanges.

6. Utilisation selon au moins une des revendications 1 à 5,
**caractérisée en ce qu'**
on utilise des polymères cationiques contenant, comme monomère ou comonomère, l'acide (méth)acrylique ou ses amides.

7. Utilisation selon au moins une des revendications 1 à 6,
**caractérisée en ce qu'**
l'on utilise les amidoamines d'acides gras et les polymères cationiques, dans un rapport pondéral de 99,9/0,1 à 50/50, à chaque fois rapporté à la teneur en matière solide.

8. Utilisation , selon au moins une des revendications 1 à 7,
**caractérisée en ce que**
l'on utilise les amidoamines d'acides gras et les polymères cationiques dans un rapport pondéral de 95/5 à 65/35, à chaque fois rapporté à la teneur en matière solide .

9. Utilisation selon au moins une des revendications 1 à 8,
**caractérisée en ce que**
l'on utilise les émulsionnants dans des proportions de 0,15 % à 1°% en poids, rapporté à l'émulsion bitumineuse.
